# EUROPÄISCHE PATENTSCHRIFT

(11) **EP 3 286 545 B1**
(45) Veröffentlichungstag und Bekanntmachung des Hinweises auf die Patenterteilung: **18.12.2019**
(21) Anmeldenummer: 16716826.9
(22) Anmeldetag: 12.04.2016
(51) Int. Cl.: G01N 15/14, B01L 3/00, G01N 21/07

(54) **ZYTOMETEREINHEIT, ZYTOMETRIERVERFAHREN, ROTIERBARER PROBENTRÄGER UND KORRESPONDIERENDE VERWENDUNG DESSELBEN**
CYTOMETER UNIT, CYTOMETRIC METHOD, ROTATABLE SAMPLE CARRIER AND CORRESPONDING USE THEREOF
UNITÉ DE CYTOMÈTRE, PROCÉDÉ DE CYTOMÉTRIE, PORTE-ÉCHANTILLON ROTATIF ET UTILISATION CORRESPONDANTE DE CEUX-CI

(30) Priorität: 22.04.2015 DE 102015005134
(43) Veröffentlichungstag der Anmeldung: 28.02.2018
(73) Patentinhaber: Testo SE & Co. KGaA, 79853 Lenzkirch (DE)
(72) Erfinder: RIEGER, Robert, 79117 Freiburg (DE); VON OLSHAUSEN, Philipp, 79106 Freiburg (DE); STRNAD, Martin, 79263 Simonswald (DE)
(74) Vertreter: Börjes-Pestalozza, Henrich
(86) Internationale Anmeldenummer: PCT/EP2016/000602
(87) Internationale Veröffentlichungsnummer: WO 2016/169641

(56) Entgegenhaltungen:
- EP-A2- 2 072 134
- EP-A2- 2 237 045
- WO-A1-2016/050750

## Beschreibung

Die Erfindung betrifft eine Zytometereinheit mit einer Aufnahme für einen einsetzbaren rotierbaren, vorzugsweise scheibenförmigen Probenträger, wobei in der Aufnahme eine mit einem eingesetzten Probenträger koppelbare Rotationseinheit angeordnet ist, mit welcher der in die Aufnahme eingesetzte Probenträger rotierbar ist, und wobei in der Aufnahme ein optischer Pfad zur Durchführung einer zytometrischen Messung an einem Zytometerkanal des eingesetzten Probenträgers ausgebildet ist.

Derartige Zytometereinheiten sind beispielsweise aus EP 2 072 134 A1, EP 2 237 045 A1 und WO 2016 050750 A1 bekannt und werden eingesetzt, um zytometrische Untersuchungen in halb- oder vollautomatisierten Verfahren durchzuführen. Der scheibenförmige Probenträger kann hierbei als Wegwerfartikel ausgebildet sein, wodurch aufwändige Reinigungsschritte vor einer erneuten Ausführung des Untersuchungsverfahrens verzichtbar sind.

Es hat sich herausgestellt, dass eine Messgenauigkeit des zytometrischen Untersuchungsverfahrens empfindlich davon abhängen kann, dass der optische Pfad auf den Zytometerkanal genau ausgerichtet wird. Hierbei weist der optische Pfad häufig einen entlang seines Verlaufs nicht gleichmäßigen Querschnitt auf, und es ist besonders wünschenswert, den Zytometerkanal in einen Fokussierabschnitt des optischen Pfades zu bringen.

Die Erfindung betrifft weiter ein Zytometrierverfahren, wobei zu einer zytometrischen Messung ein in einem Probenträger ausgebildeter, eine zu untersuchende Probe enthaltender Zytometerkanal in einen optischen Pfad gebracht wird.

Der Erfindung liegt die Aufgabe zugrunde, die Ausrichtung eines Zytometerkanals eines Probenträgers relativ zu einem optischen Pfad einer Zytometereinheit zu vereinfachen. Erfindungsgemäß sind zur Lösung der genannten Aufgabe die Merkmale des Anspruchs 1 vorgesehen. Insbesondere wird somit zur Lösung der genannten Aufgabe erfindungsgemäß bei einer Zytometereinheit der eingangs beschriebenen Art vorgeschlagen, dass ein erstes Fixiermittel ausgebildet ist, mit welchem der eingesetzte Probenträger kontaktierbar und somit eine Lage des Zytometerkanals in einer ersten Justierrichtung quer zum optischen Pfad definierbar ist, und dass ein zweites Fixiermittel ausgebildet ist, mit welchem der eingesetzte Probenträger kontaktierbar und somit eine Lage des Zytometerkanals in einer zweiten Justierrichtung längs des optischen Pfads in einer den eingesetzten Probenträger kontaktierenden Position definierbar ist. Von Vorteil ist dabei, dass Fixiermittel zur Ausrichtung des Probenträgers nach dessen Einsetzen in die Aufnahme in einem zweistufigen Verfahren eingerichtet sind, eine automatisierte Ausrichtung erreichbar ist. Somit sind aufwändige Justierschritte von Hand vermeidbar. Die Ausrichtung des Zytometerkanals zur Vorbereitung der zytometrischen Untersuchung in einem Zytometrierverfahren ist somit vereinfachbar.

Allgemein ist es von Vorteil, wenn die Wechselwirkung zwischen dem ersten Fixiermittel und dem Probenträger so eingerichtet ist, dass eine selbsttätige und/oder maschinenverarbeitbare Ausrichtung des Probenträgers in der ersten Justierrichtung möglich ist. Beispielsweise kann dies durch eine mechanische Wechselwirkung, insbesondere einen Formschluss, eingerichtet sein. Bei weiteren Ausgestaltungen kann zusätzlich oder alternativ eine maschinenverarbeitbare Wechselwirkung, beispielsweise eine elektrische, eine optische und/oder eine magnetische Wechselwirkung, eingerichtet sein.

Ein rotierbarer Probenträger ist allgemein geeignet, einen Zentrifugierschritt auszuführen. Besonders günstig ist es, wenn der Probenträger scheibenförmig ausgebildet ist, wenn er also beispielsweise eine dritte Dimension aufweist, die wesentlich kleiner als die anderen zwei Dimensionen ist. Dies hat den Vorteil, dass die Materialausnutzung insbesondere zur Aufnahme von zweidimensionalen Mikrofluid-Strukturen besonders günstig ist.

Bei einer Ausgestaltung der Erfindung kann vorgesehen sein, dass das erste Fixiermittel den Probenträger einseitig kontaktiert. Hierdurch sind ein vereinfachter konstruktiver Aufbau und ein vereinfachtes Einführen des Probenträgers in die Aufnahme erreichbar.

Alternativ oder zusätzlich kann vorgesehen sein, dass das zweite Fixiermittel den Probenträger einseitig kontaktiert.

Auch hierdurch lässt sich ein vereinfachtes Einsetzen und ein vereinfachtes Ausrichten erreichen.

Besonders günstig ist es dabei, wenn das erste Fixiermittel und/oder das zweite Fixiermittel den Probenträger jeweils axial kontaktiert/kontaktieren. Von Vorteil ist dabei, dass an dem scheibenförmigen Probenträger große Seitenflächen zur Definition von Referenzebenen oder Referenzlinien oder Referenzpunkten nutzbar sind. Besonders günstig ist es hierbei, wenn das erste Fixiermittel und das zweite Fixiermittel den Probenträger von einer gemeinsamen Seite kontaktieren. Auf diese Weise ist erreichbar, dass die Fixiermittel beim Einlegen des Probenträgers nicht stören.

Zusätzlich kann vorgesehen sein, dass ein Niederhalter zu einer Kontaktierung des eingesetzten Probenträgers von einer von dem ersten Fixiermittel und/oder dem zweiten Fixiermittel abgewandten Seite eingerichtet ist. Von Vorteil ist dabei, dass eine Positionierung des Niederhalters zur definierten Ausrichtung des Zytometerkanals in Bezug auf den optischen Pfad nicht erforderlich ist, sondern auch ein Niederhalter verwendbar ist, welcher eine bloße Haltefunktion des ausgerichteten Probenträgers ausführt. Besonders günstig ist es, wenn der Niederhalter in der Verlängerung oder Flucht des optischen Pfades angeordnet ist. Auf diese Weise kann ein besonders gut definiertes Anliegen des Probenträgers an den Fixiermitteln erreicht werden.

Das erste Fixiermittel und/oder das zweite Fixiermittel ist/sind als jeweils wenigstens ein Kugelstift ausgebildet. Ein Kugelstift kann hierbei beispielsweise dadurch charakterisiert werden, dass an einem Stift an einem freien Ende eine Kugel oder Halbkugel angeordnet ist. Von Vorteil ist dabei, dass an dem freien Ende des Kugelstiftes eine verminderte Reibung auftritt und/oder dass ein Kugelstift einen definierten Auflagepunkt bereitstellt. Beides ist für sich genommen vorteilhaft für eine definierte und einfache Ausrichtung des Probenträgers an den Fixiermitteln.

Für eine Fixierung und Ausrichtung in der ersten Justierrichtung ist vorgesehen, dass das erste Fixiermittel formschlüssig mit einem Gegenfixiermittel an dem Probenträger zusammenwirkt, insbesondere zur Bildung einer Kugelraste. Durch ein Einrasten in den Formschluss ist einfach erkennbar, dass eine Ausrichtung an dem ersten Fixiermittel in der ersten Justierrichtung erreicht ist. Somit kann auf einfache Weise mit der Ausrichtung in der zweiten Justierrichtung fortgefahren werden.

Bei einer Ausgestaltung der Erfindung kann vorgesehen sein, dass der optische Pfad zwischen wenigstens einem Teil des ersten Fixiermittels, insbesondere einem Anlagepunkt, und wenigstens einem Teil des zweiten Fixiermittels, insbesondere einem Anlagepunkt, ausgebildet ist. Somit ist erreichbar, dass eine Ausrichtung des Zytometerkanals in Bezug auf den optischen Pfad im wesentlichen oder vollständig durch die Lage der Fixiermittel im Raum vorgegeben ist, wobei zusätzliche Auflagepunkte des Probenträgers, beispielsweise an der angekoppelten Rotationseinheit, einen vernachlässigbaren oder sogar gar keinen Einfluss auf die Qualität der zytometrischen Untersuchung haben. Somit sind insbesondere Lagerspiele, die bei Rotationseinheiten notwendig vorhanden sind, bei der Ausrichtung des Probenträgers hinnehmbar, indem ein Einfluss dieser Lagerspiele auf die Qualität oder Präzision der Ausrichtung des Zytometerkanals auf den optischen Pfad verminderbar ist. Besonders günstig ist es, wenn das erste Fixiermittel und/oder das zweite Fixiermittel zur Definition der Lage in der zweiten Justierrichtung zwei Anlagepunkte für den einsetzbaren Probenträger bildet/bilden. Von Vorteil ist dabei, dass eine Ausrichtung des Probenträgers in der zweiten Justierrichtung besonders genau vorgebbar ist. Bevorzugt ist vorgesehen, dass die zwei Anlagepunkte durch das zweite Fixiermittel gebildet sind. Bevorzugt ist einer der Anlagepunkte der bereits zum zweiten Fixiermittel erwähnte Anlagepunkt. Die Anlagepunkte des zweiten Fixiermittels können hierbei voneinander beabstandet sein und besonders bevorzugt den optischen Pfad zwischen sich einschließen.

Besonders günstig ist es, wenn der optische Pfad eine Verbindungslinie zwischen den zwei Anlagepunkten schneidet. Somit ist erreichbar, dass eine Veränderung eines dritten Anlagepunktes des Probenträgers, der beispielsweise durch die bereits erwähnte Rotationseinheit gegeben sein kann, lediglich zu einem Verkippen des Probenträgers um die Verbindungslinie führt. Durch die Anordnung und Ausrichtung des optischen Pfads derart, dass der optische Pfad die Verbindungslinie schneidet, führt ein derartiges Verkippen um die Verbindungslinie nicht zu einer Veränderung des Schnittpunktes des optischen Pfades mit der Verbindungslinie. Ist nun der optische Pfad auf die Verbindungslinie fokussiert, so ist ein empfindlicher Bereich für die zytometrische Untersuchung unabhängig von einem Spiel der Rotationseinheit.

Alternativ oder zusätzlich kann vorgesehen sein, dass das erste Fixiermittel in einer Richtung längs des optischen Pfads elastisch nachgiebig ausgebildet ist. Von Vorteil ist dabei, dass eine Beeinflussung einer Ausrichtung oder Justage in der zweiten Justierrichtung durch das erste Fixiermittel verminderbar oder sogar vermeidbar ist. Hierbei kann vorgesehen sein, dass das Fixiermittel federnd nachgiebig ausgebildet ist.

Bei einer Ausgestaltung der Erfindung kann vorgesehen sein, dass die erste Justierrichtung in Bezug auf eine Drehachse der Rotationseinheit quer zu einer Radialrichtung ausgerichtet ist. Von Vorteil ist dabei, dass eine Ausrichtung durch Lageveränderung des Zytometerkanals in der ersten Justierrichtung durch eine Drehbewegung der Rotationseinheit einfach ausführbar ist. Hierbei ergeben sich somit besonders einfache Verhältnisse, wenn die erste Justierrichtung tangential oder in Umfangsrichtung in Bezug auf die Drehachse der Rotationseinheit ausgerichtet ist.

Alternativ oder zusätzlich kann vorgesehen sein, dass die zweite Justierrichtung in Bezug auf eine Drehachse, beispielsweise die bereits erwähnte Drehachse, der Rotationseinheit quer zu einer Radialrichtung, beispielsweise der bereits erwähnten Radialrichtung, und einer Tangentialrichtung ausgerichtet ist. Beispielsweise kann die zweite Justiereinrichtung axial ausgerichtet sein. Von Vorteil ist dabei, dass eine Lageveränderung des Probenträgers beziehungsweise des Zytometerkanals in der zweiten Justierrichtung durch eine Axialverschiebung des eingesetzten Probenträges ausführbar ist. Derartige Axialverschiebungen sind beispielsweise durch Absenken des Probenträges einfach ausführbar.

Zur Lösung der genannten Aufgabe sind alternativ oder zusätzlich die Merkmale des auf ein Zytometrierverfahren gerichteten unabhängigen Anspruch vorgesehen. Insbesondere wird somit erfindungsgemäß bei einem Zytometrierverfahren der eingangs beschriebenen Art vorgeschlagen, dass der Probenträger um eine Drehachse rotierbar gelagert ist, dass der Probenträger mit einem ersten Fixiermittel zu einer Ausrichtung des Zytometerkanals auf den optischen Pfad beabstandet zu der Drehachse derart kontaktiert wird, dass eine Lage des Zytometerkanals in einer ersten Justierrichtung quer zum optischen Pfad definiert wird, und dass der Probenträger mit einem zweiten Fixiermittel zu einer Ausrichtung des Zytometerkanals auf den optischen Pfad beabstandet zu der Drehachse derart kontaktiert wird, dass eine Lage des Zytometerkanals in einer zweiten Justierrichtung längs des optischen Pfads definiert wird. Da der Zytometerkanal häufig zumindest in seinem Messabschnitt einen homogenen Querschnitt aufweist, kann die Lage des Zytometerkanals beispielsweise durch die Lage des Querschnitts des Zytometerkanals in Bezug auf den optischen Pfad charakterisierbar sein. Die Erfindung erreicht, dass eine Ausrichtung des Zytometerkanals in einem zweistufigen, automatisierbaren Verfahren ohne wertenden Eingriff eines Benutzers ausführbar ist. Hierbei können die zwei Stufen des Verfahrens auch überlappend oder gleichzeitig auführbar sein. Besonders günstig ist es jedoch, wenn die zwei Stufen des Verfahrens nacheinander ausgeführt werden, wenn also zunächst eine Ausrichtung in einer Justierrichtung und sodann eine Ausrichtung in einer anderen Justierrichtung ausgeführt wird. Hierbei ist es besonders günstig, wenn zuerst die Ausrichtung in der ersten Justierrichtung und sodann die Ausrichtung in der zweiten Justierrichtung ausgeführt wird.

Bevorzugt erfolgt die Ausrichtung des Probenträgers nach einer Zentrifugierung des Probenträgers.

Bei einer Ausgestaltung der Erfindung kann vorgesehen sein, dass Probenträger mit dem ersten Fixiermittel und/oder dem zweiten Fixiermittel einseitig kontaktiert wird/werden. Dies ermöglicht eine einfache Ausgestaltung des Aufnahmeraums. Beispielsweise kann die Kontaktierung axial erfolgen, so dass eine große Fläche des rotierbaren, vorzugsweise scheibenförmigen, Probenträgers nutzbar ist. Besonders günstig ist es hierbei, wenn der Probenträger mit dem ersten Fixiermittel und dem zweiten Fixiermittel von einer gemeinsamen Seite kontaktiert wird. Somit ist eine automatisierte Ausrichtung des eingesetzten Probenträgers einfach ausführbar.

Bevorzugt ist hierbei vorgesehen, dass das erste Fixiermittel während der Definition der Lage in der zweiten Justierrichtung nachgibt. Somit ist eine Behinderung der Ausrichtung in der zweiten Justierrichtung durch das erste Fixiermittel vermeidbar.

Bei einer Ausgestaltung der Erfindung kann vorgesehen sein, dass das erste Fixiermittel und ein Gegenfixiermittel des Probenträgers miteinander in Eingriff gebracht werden, um den Probenträger formschlüssig zur Definition der Lage des Zytometerkanals in der ersten Justierrichtung zu fixieren. Eine formschlüssige Fixierung hat sich als günstig erwiesen, um ein Erreichen der ausgerichteten Position einfach sicherzustellen und/oder einfach zu erkennen. Hierbei kann vorgesehen sein, dass das Gegenfixiermittel eine keilförmige Ausnehmung aufweist. Von Vorteil ist dabei, dass beispielsweise ein Kugelstift einfach in das Gegenfixiermittel einführbar ist, um eine Ausrichtung in der ersten Justierrichtung zu erreichen. Bevorzugt werden das Fixiermittel und das Gegenfixiermittel als Kugelraste miteinander in Eingriff gebracht.

Bei einer Ausgestaltung der Erfindung kann vorgesehen sein, dass der Probenträger zur Definition der Lage in der ersten Justierrichtung um die Drehachse gedreht wird. Somit ist der erste Ausrichtungsschritt einfach mit der Rotationseinheit ausführbar. Besonders günstig ist es, wenn der Probenträger vor der Ausrichtung mit der Rotationseinheit zentrifugiert wird, beispielsweise für eine Probenvorbereitung.

Zusätzlich oder alternativ kann vorgesehen sein, dass der Probenträger zur Definition der Lage in der zweiten Justierrichtung entlang der Drehachse verschoben wird. Somit ist eine Ausrichtung in der zweiten Justierrichtung zumindest teilweise durch ein Absenken des Probenträgers in der Rotationseinheit ausführbar. Zusätzlich oder alternativ hierzu kann vorgesehen sein, dass der Probenträger zur Definition der Lage in der zweiten Justierrichtung um eine den optischen Pfad schneidende Verbindungslinie geschwenkt wird. Beispielsweise kann die Verbindungslinie zwischen zwei durch das erste Fixiermittel und/oder das zweite Fixiermittel in der bereits beschriebenen Art definierten Auflagepunkten verlaufen. Von Vorteil ist dabei, dass ein exaktes Erreichen der Endposition dieser Verschwenkungsbewegung nicht erforderlich ist, um den optischen Pfad auf die Verbindungslinie auszurichten. Bevorzugt ist vorgesehen, dass zunächst eine Verschiebung des Probenträgers entlang der Drehachse und zum Ende eine Schwenkbewegung des Probenträgers in der beschriebenen Art ausgeführt wird. Die Schwenkbewegung kann hierbei einen wesentlich kürzeren Verschwenkweg aufweisen als die vorangehende Verschiebungsbewegung. Von Vorteil ist dabei, dass eine Ausrichtung in der zweiten Justierrichtung durch ein Absenken des Probenträgers über die durch das ersten Fixierungsmittel und/oder das zweite Fixiermittel definierten Auflagepunkte hinaus ausführbar ist. Somit kann ein sicheres, definiertes Anliegen an den Anlagepunkten erreicht werden.

Ein scheibenförmiger Probenträger der eingangs beschriebenen Art kann ein Gegenfixiermittel aufweisen, wobei das Gegenfixiermittel zu einer formschlüssigen Fixierung des Probenträgers quer zu einer Erstreckungsrichtung des Zytometerkanals ausgeformt ist. Beispielsweise kann das Gegenfixiermittel eine im Profil keilförmige Ausnehmung aufweisen, wobei ein Verlauf der Keilform quer zum Verlauf des Zytometerkanals ausgerichtet sein kann. Dies kann beispielsweis dadurch erreicht sein, dass das Gegenfixiermittel eine Längserstreckung aufweist, die parallel oder längs des Zytometerkanals, beispielsweise radial bei einem radial ausgerichteten Zytometerkanal, ausgerichtet ist. Somit ist eine vereinfachte Ausrichtung des rotierbaren, vorzugsweise scheibenförmigen Probenträgers nach Einsetzen in eine erfindungsgemäße Zytometereinheit möglich. Hier können die Begriffe radial und axial durch eine Kupplungsstelle des Probenträgers vorgegeben sein, mit welcher der Probenträger mit der Rotationseinheit gekoppelt wird. Somit sind die Begriffe radial und axial in Gebrauchsstellung auch auf eine Drehachse oder Rotationseinheit beziehbar. Die Begriffe radial und axial sind somit auf eine Drehachse beziehbar, die durch die Rotierbarkeit gegeben ist.

Entsprechend sieht eine bevorzugte Anwendung ein Zytometereinheit-Set mit einer erfindungsgemäßen Zytometereinheit und einem austauschbaren, rotierbaren, vorzugsweise scheibenförmigen, Probenträger vor.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Schutzansprüche untereinander und/oder mit einzelnen oder mehreren Merkmalen der Ausführungsbeispiele.

Es zeigt in zu Erläuterung der Erfindung stark vereinfachter, schematisierter Darstellung:
- Fig. 1: eine erfindungsgemäße Zytometereinheit mit einzusetzendem Probenträger in einer dreidimensionalen Schrägansicht,
- Fig. 2: die erfindungsgemäße Zytometereinheit gemäß Fig. 1 in einer schematischen Schnittdarstellung vor Einstellen des Probenträgers in die Gebrauchsposition, für die zytometrische Messung,
- Fig. 3: die Zytometereinheit gemäß Fig. 2 nach einer Justierung des eingesetzten Probenträgers in einer ersten Justierrichtung,
- Fig. 4: die Zytometereinheit gemäß Fig. 2 nach Fixierung in einer zweiten Justierrichtung,
- Fig. 5: die Zytometereinheit gemäß Fig. 1 in einer gegenüber Fig. 2 um 90° gedrehte Schnittdarstellung während des Einsetzen des Probenträgers und
- Fig. 6: die Zytometereinheit in einer Ansicht gemäß Fig. 5 nach Fixierung des Probenträgers in der ersten und der zweiten Justierrichtung.

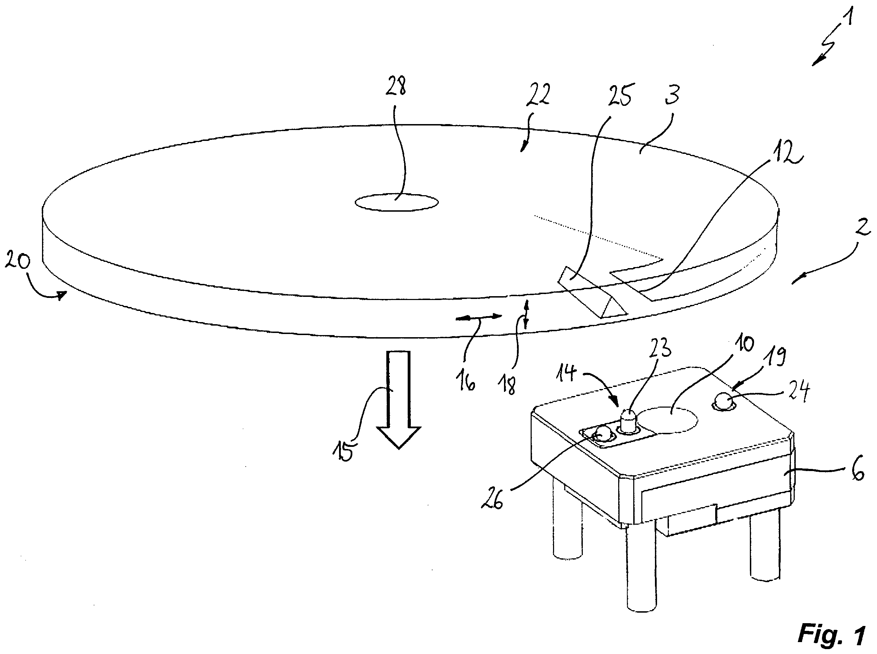

Im Folgenden werden die Figuren 1 bis 6 gemeinsam beschrieben.

Eine im Ganzen mit 1 bezeichnete erfindungsgemäße Zytometereinheit hat eine Aufnahme 2, in die ein rotierbarer, hier scheibenförmiger, Probenträger 3 einsetzbar ist.

Die Aufnahme 2 kann hierbei durch einen Schlitz, ein ausfahrbares Tablett, eine schwenk- und/oder schiebbare Abdeckung oder allgemein eine Zuführöffnung in an sich bekannter Weise mit einem rotierbaren, vorzugsweise scheibenförmigen Probenträger 3 bestückbar sein. Der Probenträger 3 ist auswechselbar und wird nach Gebrauch durch einen neuen Probenträger 3 ersetzt.

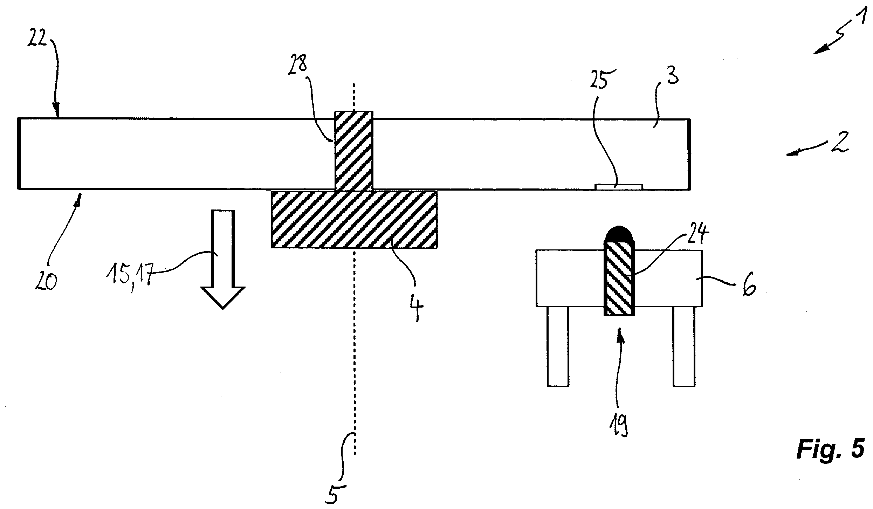

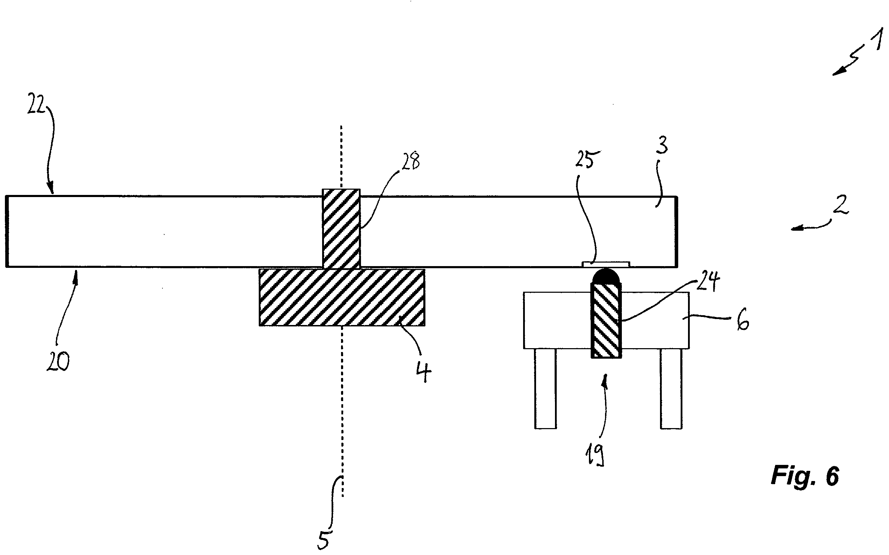

Die Zytometereinheit 1 hat eine in Figur 5 und Figur 6 angedeutete Rotationseinheit 4, die mit dem eingesetzten Probenträger 3 koppelbar ist. Mit der Rotationseinheit 4 ist der angekoppelte eingesetzte Probenträger 3 um eine Drehachse 5 rotierbar. Die Drehachse 5 kann hierbei senkrecht zu einer durch die Scheibenform des Probenträgers 3 vorgegebenen Ebene ausgerichtet sein. Die Rotationseinheit ist so ausgebildet, dass ein eingesetzter und mit ihr gekoppelter Probenträger 3 zentrifugierbar ist.

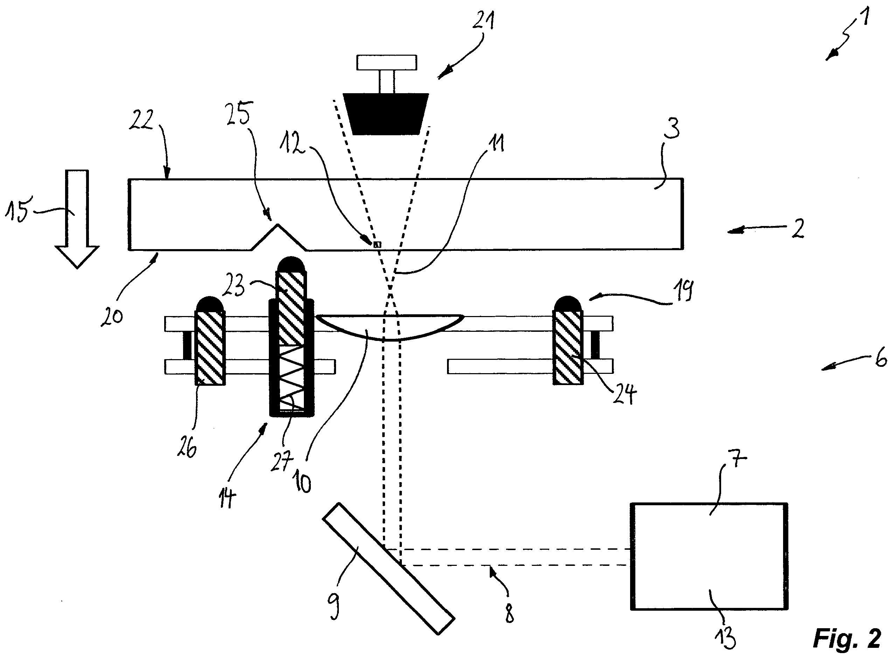

Die Zytometereinheit 1 hat weiter eine Justier- und Messeinheit 6. Die Figuren 2 bis 4 zeigen den prinzipiellen Innenaufbau der Justier- und Messeinheit 6. Eine Laserlichtquelle 7 dient der Erzeugung eines Lichtstrahls 8, welcher über wenigstens einen Spiegel 9 und wenigstens eine Linse 10 einer Linsenanordnung der Aufnahme 2 zugeführt wird. Der wenigstens eine Spiegel 9 und die wenigstens eine Linse 10 der Linsenanordnung definieren so einen optischen Pfad 11 in der Aufnahme 2.

Der Probenträger 3 weist einen Zytometerkanal 12 auf, durch den eine zu untersuchende Probe strömen kann.

Der optische Pfad 11 ist zur Durchführung einer zytometrischen Messung an diesem Zytometerkanal 12 ausbildet, indem die wenigstens eine Linse 10 der Linsenanordnung mit dem wenigstens einen Spiegel 9 Licht, das durch den Lichtstrahl 8 im Zytometerkanal 12 angeregt wird, auf einen Detektor 13 leitet, wo es detektiert wird.

Zur Ausführung dieser zytometrischen Messung wird der Probenträger 3 daher in die Aufnahme 2 eingesetzt. Hierbei muss der eingesetzte Probenträger 3 mit seinem Zytometerkanal 2 auf den optischen Pfad 11 ausgerichtet werden. Zuvor kann der Probenträger 3 mit der Rotationseinheit 4 zentrifugiert werden.

Die Justier- und Messeinheit 6 weist für diese Ausrichtung ein erstes Fixiermittel 14 auf, welches in den Figuren 1 bis 4 dargestellt und in Figur 5 und Figur 6 zur Vereinfachung der Darstellung weggelassen ist.

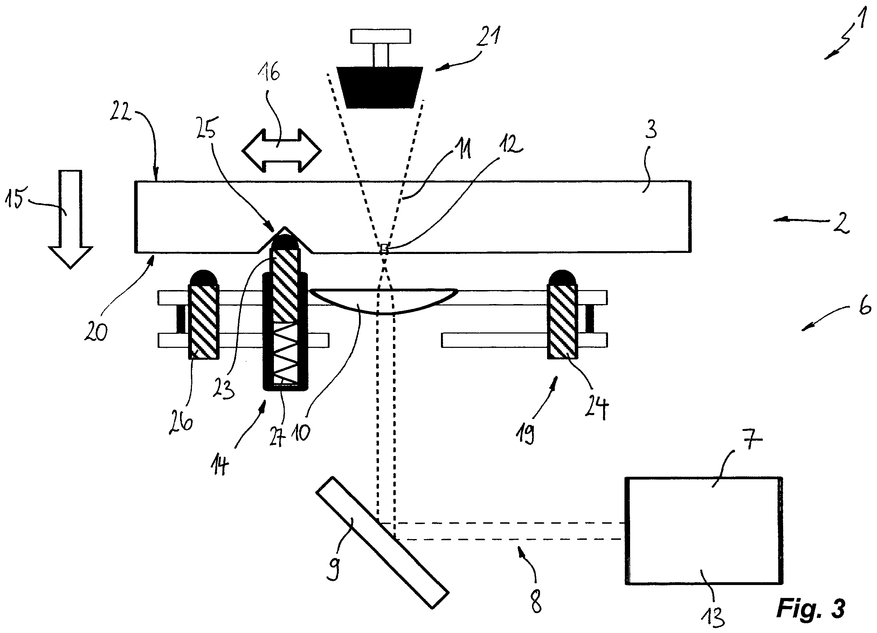

In noch genauer zu beschreibenden Weise wirkt dieses erste Fixiermittel 14 mit dem Probenträger 3 derart zusammen, dass eine Lage des Zytometerkanals 12 in einer ersten Justierrichtung 16 (vergleiche Figur 3) definiert ist. Zunächst wird der Probenträger 3 durch eine Drehbewegung um seine Drehachse so ausgerichtet, dass ein Gegenfixiermittel 25, das hier als Kerbe zur formschlüssigen Wechselwirkung gezeigt ist oder als sonstige elektrisch, optisch, magnetisch oder allgemein maschinenlesbar auslesbare Markierung vorgesehen sein kann, gegenüber dem Kugelstift 21 oder allgemein dem ersten Fixiermittel 14 ausgerichtet ist. Diese Ausrichtung ermöglicht, dass das erste Fixiermittel 14 in das Gegenfixiermittel 25 eingreift, wenn die Absenkbewegung 15 ausgeführt wird. Hierbei wird der Probenträger 3 in einer ersten Absenkbewegung 15 zunächst längs der Drehachse 5 bewegt, bis das erste Fixiermittel 14 den Probenträger 3 kontaktiert. Alternativ ist die erste Absenkbewegung 15 als Relativbewegung zwischen dem Probenträger 3 und der Justier- und Messeinheit 6 ausgebildet, wobei beispielsweise die Justier- und Messeinheit 6 gegen eine stillstehenden Probenträger 3 verfahren werden kann.

Nach Abschluss der ersten Absenkbewegung 15 ergibt sich somit die Situation gemäß Figur 3, wobei der Probenträger 3 selbsttätig aufgrund der Form des Gegenkoppelmittels 25 um die Drehachse 5 solange gedreht wurde, bis das erste Fixiermittel 14 an dem Probenträger 3 einrastet. Hierdurch ist die Lage des Zytometerkanals 12 in der ersten Justierrichtung 16 definiert.

Anschließend wird der Probenträger 3 in einer zweiten Absenkbewegung 17 bewegt, wobei die Lage des Zytometerkanals 12 in einer zweiten Justierrichtung 18 längs des optischen Pfades 11 definieren wird. Die zweite Absenkbewegung 17 wird hierbei ausgeführt, bis ein zweites Fixiermittel 19 den Probenträger 3 kontaktiert. Alternativ kann die zweite Absenkbewegung 17 auch als Relativbewegung ausgeführt werden, beispielsweise indem die Justier- und Messeinheit 6 auf den Probenträger 3 zubewegt wird.

Das erste Fixiermittel 14 und das zweite Fixiermittel 19 kontaktieren den Probenträger 3 einseitig an dessen Unterseite 20. Das erste Fixiermittel 14 und das zweite Fixiermittel 19 sind jeweils so ausgerichtet, dass der Probenträger 3 während der Absenkbewegungen 15 und 17 axial kontaktiert wird.

Zur Unterstützung der zweiten Absenkbewegung 17 und gegebenenfalls auch der ersten Absenkbewegung 15 ist ein Niederhalter 21 vorgesehen, welcher den Probenträger 3 beaufschlagt. Hierbei greift der Niederhalter 21 auf der von der Unterseite 20 abgewandten Seite 22, der Oberseite des Probenträgers 3, an. Der Niederhalter 21 ist in den Figuren 1, 5 und 6 zu Vereinfachung der Darstellung weggelassen. Aus den Figuren 2 bis 4 ist ersichtlich, dass der Niederhalter 21 in der Verlängerung oder Flucht des optischen Pfades 11 angeordnet ist. Hieraus ergibt sich eine mittige Aufnahme der Anpresskräfte durch die Fixiermittel 14 und 19 auf der gegenüberliegenden Seite des Probenträgers 3.

Das erste Fixiermittel 14 ist als Kugelstift 23 ausgebildet. Der Kugelstift 23 hat hierbei in an sich bekannter Weise eine dem Probenträger 3 zugewandte Spitze, die halbkugelförmig ausgeformt ist, um gut auf dem Probenträger 3 zu gleiten.

Auch das zweite Fixiermittel 19 weist einen Kugelstift 24 auf.

An dem hier scheibenförmigen Probenträger 3 ist an der Unterseite 20 ein Gegenfixiermittel 25 ausgebildet, welches mit den ersten Fixiermittel 14 zur Definition der Ausrichtung des Zytometerkanals 12 quer zu seiner Erstreckungsrichtung und quer zum optischen Pfad 11 zu definieren.

Das Gegenfixiermittel 25 ist an dem rotierbaren, hier scheibenförmigen Probenträger 3 als keilförmige Ausriehmung ausgebildet, welche in Bezug auf die Drehachse 5 radial verläuft.

In der definierten Lage des Zytometerkanals 12 rastet der Kugelstift 23 des ersten Fixiermittels 14 in dieses Gegenfixiermittel 25, wie dies Figur 3 zeigt.

Hierdurch ist eine Kugelraste gebildet.

Die halbkugelförmigen Spitzen der Kugelstifte 23 und 24 definieren jeweils einen Anlagepunkt an dem Probenträger 3. Der optische Pfad 11 verläuft zwischen dem Kugelstift 23 als Teil des ersten Fixiermittels 14 und dem Kugelstift 24 als Teil des zweiten Fixiermittels 19. Der optische Pfad 11 schneidet hierbei eine Verbindungslinie zwischen den erwähnten Anlagepunkten des Kugelstifts 23 und des Kugelstifts 24.

Das zweite Fixiermittel 19 hat einen weiteren Kugelstift 26, welcher ebenfalls einen Anlagepunkt an dem Probenträger 3 definiert.

Die Fixiermittel 14, 19 sind beabstandet zu der Drehachse 5 angeordnet, so dass die erwähnten Anlagepunkte voneinander beabstandet und zu der Drehachse 5 beabstandet sind. Die Kugelstifte 24, 26 sind ebenfalls so angeordnet, dass eine Verbindungslinie zwischen den zugehörigen Anlagepunkten von dem optischen Pfad 11 geschnitten wird.

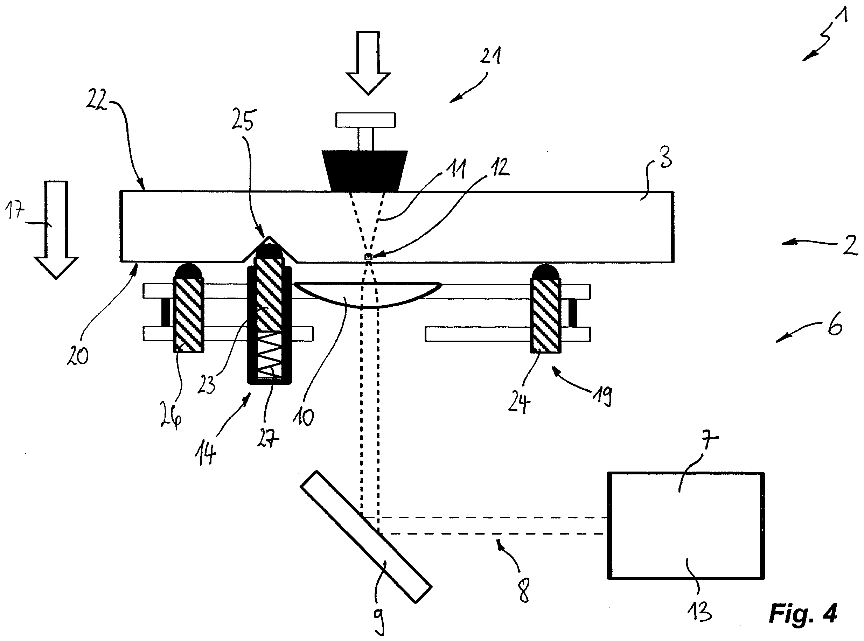

Der Kugelstift 23 ist von einem Federelement 27 beaufschlagt, so dass das erste Fixiermittel 14 in einer Richtung längs des optischen Pfads 11 elastisch nachgiebig ausgebildet ist. Hierdurch wird erreicht, dass in der Situation gemäß Figur 4 der Kugelstift 23 in das Gegenfixiermittel 25 eingreifen kann, ohne dass sich eine überbestimmte Situation ergebe.

Aus dem vorstehend beschriebenen ist deutlich, dass die erste Justierrichtung 16 quer zu einer radialen Richtung in Bezug auf die Drehachse 5, also in Umfangsrichtung oder tangential, ausgerichtet ist, während die zweite Justierrichtung 18 quer zu der ersten Justierrichtung 16 und axial in Bezug auf die Drehachse 5 ausgerichtet ist.

Die Figuren 5 und 6 zeigen, dass das zweite Fixiermittel 19 beabstandet zu der Drehachse 5 angeordnet ist. Die Kugelstifte 24 und 26 sind hierbei in einem übereinstimmenden Abstand von der Drehachse 5 angeordnet.

Hierdurch wird erreicht, dass bei einem Absenken der Rotationseinheit 4 in der zweiten Absenkbewegung 17 nach Kontaktierung des Probenträgers 3 durch die Kugelstifte 24 und 26 der Probenträger 3 um eine Verbindungslinie der Anlagepunkte der Kugelstifte 24 und 26 verschwenkt wird, wenn ein Spiel der Rotationseinheit 4 dies zulässt. Die Rotationseinheit 4 bildet somit einen spielbehafteten Auflagepunkt für den Probenträger 3.

Diese Verschwenkbewegung führt jedoch nicht zu einer Neuausrichtung desjenigen Teils des Zytometerkanals 12, welcher den Schnittpunkt mit der erwähnten Verbindungslinie beinhaltet. Da sich in diesem Punkt die erwähnte Verbindungslinie, der Zytometerkanal 12 und der optische Pfad 11 schneiden, bewirkt das Verschwenken keine Änderung der Relativlage dieses Schnittpunkts in Bezug auf den Zytometerkanals 12 und den optischen Pfad 11. Der Probenträger 3 ist somit zwar nur bis auf das Spiel der Rotationseinheit 4, also bis auf eine Toleranz des Auflagepunktes, eindeutig festgelegt, für die Zwecke der zytometrischen Messung ist dies jedoch ausreichend. Denn der verbleibende Freiheitsgrad ist für eine genaue Ausrichtung des Zytometerkanals 12 auf den optischen Pfad 11 nicht relevant.

Der Probenträger 3 hat eine Kupplungsstelle 28, die in den Figuren 1, 5 und 6 wiedergegeben ist. Mit der Kupplungsstelle 28 ist der rotierbare Probenträger 3 an die Rotationseinheit 4 ankuppelbar.

Die Kupplungsstelle 28 gibt somit ebenfalls die Lage der Drehachse 5 an den Probenträger 3 in dessen Gebrauchsposition vor.

Die erwähnten Richtungsangaben "axial" und "radial" und "tangential" sind somit ebenfalls auf die Kupplungsstelle 28 beziehbar.

In Figur 1 ist ersichtlich, dass der Zytometerkanal 12 in Bezug auf diese Drehachse 5 radial ausgerichtet ist. Somit ist der Probenträger 3 in der Zytometereinheit 1 zur Ausführung des erfindungsgemäßen Verfahren verwendbar.

Bei dem erfindungsgemäßen Verfahren wird somit der Probenträger 3, in dessen Zytometerkanal 12 eine zu untersuchende Probe angeordnet ist, in den optischen Pfad 11 gebracht. Der Probenträger 3 ist hierbei um die Drehachse 5 rotierbar gelagert und wird mit dem ersten Fixiermittel 14 derart beabstandet zu dem optischen Pfad 11 und zu der Drehachse 5 derart kontaktiert, dass eine Lage des Zytometerkanals 12 in der ersten Justierrichtung 16 relativ zu dem optischen Pfad 11 definiert wird. Hierzu wird der Probenträger 3 um die Drehachse 5 gedreht.

Anschließend oder gleichzeitig wird der Probenträger 3 mit einem zweiten Fixiermittel 19, welches im Anwendungsfall zwei Kugelstifte 24 und 26 aufweist, kontaktiert, um die Ausrichtung des Zytometerkanals 12 auf den optischen Pfad 11 festzulegen. Durch das zweite Fixiermittel wird somit die Lage des Zytometerkanals 12 längs des optischen Pfads 11 definiert. Bei der Definition der Lage des Zytometerkanals 12 in der ersten Justierrichtung 16 wirkt hierbei die Kugelraste 23 des ersten Fixiermittels 14 mit dem Gegenfixiermittel 25 formschlüssig nach Art einer Kugelraste zusammen. Die Drehbewegung des Probenträgers 3 wird somit solange ausgeführt, bis der Kugelstift 23 in dem Gegenfixiermittel 25 eingerastet ist.

Nach der definierten Ausrichtung schließt sich die zytometrische Messung bei stillstehendem Probenträger 3 an.

Bei der Zytometereinheit 1 mit einer Aufnahme 2, in welche ein rotierbarer, vorzugsweise scheibenförmiger Probenträger 3 einsetzbar ist, wird vorgeschlagen, ein erstes Fixiermittel 14 zur Definition einer Lage eines Zytometerkanals 12 des eingesetzten Probenträgers 3 quer zur dessen Erstreckungsrichtung und quer zu einem optischen Pfad 11, mit welchem eine zytometrische Messung ausführbar ist, zu definieren und mit einem zweiten Fixiermittel 19 eine Lage des Zytometerkanals 12 des eingesetzten Probenträgers 3 längs des optischen Pfads 11 zu definieren.

### Bezugszeichenliste

- 1: Zytometereinheit
- 2: Aufnahme
- 3: Probenträger
- 4: Rotationseinheit
- 5: Drehachse
- 6: Justier- und Messeinheit
- 7: Laserlichtquelle
- 8: Lichtstrahl
- 9: Spiegel
- 10: Linse
- 11: optischer Pfad
- 12: Zytometerkanal
- 13: Detektor
- 14: erstes Fixiermittel
- 15: erste Absenkbewegung
- 16: erste Justierrichtung
- 17: zweite Absenkbewegung
- 18: zweite Justierrichtung
- 19: zweites Fixiermittel
- 20: Unterseite
- 21: Niederhalter
- 22: abgewandte Seite
- 23: Kugelstift
- 24: Kugelstift
- 25: Gegenfixiermittel
- 26: Kugelstift
- 27: Federelement
- 28: Kupplungsstelle

## Patentansprüche

1. Zytometereinheit (1), mit einer Aufnahme (2) für einen einsetzbaren rotierbaren, vorzugsweise scheibenförmigen Probenträger (3), wobei in der Aufnahme (2) eine mit einem eingesetzten Probenträger (3) koppelbare Rotationseinheit (4) angeordnet ist, mit welcher der in die Aufnahme (2) eingesetzter Probenträger (3) rotierbar ist, und wobei in der Aufnahme (2) ein optischer Pfad (11) zur Durchführung einer zytometrischen Messung an einem Zytometerkanal (12) des eingesetzten Probenträgers (3) ausgebildet ist, wobei ein erstes Fixiermittel (14) ausgebildet ist, mit welchem der eingesetzte Probenträger (3) kontaktierbar und somit eine Lage des Zytometerkanals (12) in einer ersten Justierrichtung (16) quer zum optischen Pfad (11) definierbar ist, und wobei ein zweites Fixiermittel (19) ausgebildet ist, mit welchem der eingesetzte Probenträger (3) kontaktierbar und somit eine Lage des Zytometerkanals (12) in einer zweiten Justierrichtung (18) längs des optischen Pfads (11) in einer den eingesetzten Probenträger (3) kontaktierenden Position definierbar ist **dadurch gekennzeichnet, dass** das erste Fixiermittel (14) und/oder das zweite Fixiermittel (19) als jeweils wenigstens ein Kugelstift (23, 24, 26) ausgebildet ist/sind und dass das erste Fixiermittel (14) formschlüssig mit einem Gegenfixiermittel (25) an dem Probenträger (3) zusammenwirkt.

2. Zytometereinheit (1) nach Anspruch 1, **dadurch gekennzeichnet, dass** das erste Fixiermittel (14) und/oder das zweite Fixiermittel (19) den Probenträger (3) einseitig vorzugsweise axial kontaktiert/kontaktieren, insbesondere von einer gemeinsamen Seite, insbesondere wobei ein Niederhalter (21) zu einer Kontaktierung des eingesetzten Probenträgers (3) von einer von dem ersten Fixiermittel (14) und/oder dem zweiten Fixiermittel (19) abgewandten Seite eingerichtet ist.

3. Zytometereinheit (1) nach einem der Ansprüche 1 bis 2, **dadurch gekennzeichnet, dass** der optische Pfad (11) zwischen wenigstens einem Teil des ersten Fixiermittels (14) und wenigstens einem Teil des zweiten Fixiermittels (19) ausgebildet ist.

4. Zytometereinheit (1) nach einem der Ansprüche 1 bis 3, **dadurch gekennzeichnet, dass** das erste Fixiermittel (14) und/oder das zweite Fixiermittel (19) zur Definition der Lage in der zweiten Justierrichtung (18) zwei Anlagepunkte für den einsetzbaren Probenträger (3) bildet/bilden, wobei der optische Pfad (11) eine Verbindungslinie zwischen den zwei Anlagepunkten schneidet, und/oder dass das erste Fixiermittel (14) in einer Richtung längs des optischen Pfads (11) elastisch nachgiebig ausgebildet ist.

5. Zytometereinheit (1) nach einem der Ansprüche 1 bis 4, **dadurch gekennzeichnet, dass** die erste Justierrichtung (16) in Bezug auf eine Drehachse (5) der Rotationseinheit (4) quer zu einer Radialrichtung, insbesondere tangential, ausgerichtet ist und/oder dass die zweite Justierrichtung (18) in Bezug auf die oder eine Drehachse (5) der Rotationseinheit (4) quer zu der oder einer Radialrichtung und einer Tangentialrichtung, insbesondere axial, ausgerichtet ist.

6. Zytometrierverfahren, wobei zu einer zytometrischen Messung ein in einem rotierbaren, vorzugsweise scheibenförmigen, Probenträger (3) ausgebildeter, eine zu untersuchende Probe enthaltender Zytometerkanal (12) in einen optischen Pfad (11) gebracht wird, wobei der Probenträger (3) um eine Drehachse (5) rotierbar gelagert ist, wobei der Probenträger (3) mit einem ersten Fixiermittel (14) zu einer Ausrichtung des Zytometerkanals (12) auf den optischen Pfad (11) beabstandet zu der Drehachse (5) derart kontaktiert wird, wobei eine Lage des Zytometerkanals (12) in einer ersten Justierrichtung (16) quer zum optischen Pfad (11) definiert wird, wobei der Probenträger (3) mit einem zweiten Fixiermittel (19) zu einer Ausrichtung des Zytometerkanals (12) auf den optischen Pfad (11) beabstandet zu der Drehachse (5) derart kontaktiert wird, und wobei eine Lage des Zytometerkanals (12) in einer zweiten Justierrichtung (18) längs des optischen Pfads (11) definiert wird, **dadurch gekennzeichnet, dass** das erste Fixiermittel (14) und ein Gegenfixiermittel (25) des Probenträgers (3) miteinander in Eingriff gebracht werden, um den Probenträger (3) formschlüssig zur Definition der Lage des Zytometerkanals (12) in der ersten Justierrichtung (16) zu fixieren wobei das erste Fixiermittel (14) als ein Kugelstift (23, 24, 26) ausgebildet ist.

7. Zytometrierverfahren nach Anspruch 6, **dadurch gekennzeichnet, dass** der Probenträger (3) mit dem ersten Fixiermittel (14) und/oder dem zweiten Fixiermittel (19) einseitig vorzugsweise axial kontaktiert wird/werden, insbesondere von einer gemeinsamen Seite, insbesondere wobei das erste Fixiermittel (14) während der Definition der Lage in der zweiten Justierrichtung (18) nachgibt.

8. Zytometrierverfahren nach einem der Ansprüche 6 oder 7 **dadurch gekennzeichnet, dass** der Probenträger (3) zur Definition der Lage in der ersten Justierrichtung (16) um die Drehachse (5) gedreht wird und/oder dass der Probenträger (3) zur Definition der Lage in der zweiten Justierrichtung (18) entlang der Drehachse (5) verschoben und/oder um eine den optischen Pfad (11) schneidende, zwischen zwei durch das erste Fixiermittel (14) und/oder das zweite Fixiermittel (19) definierten Auflagepunkten verlaufende Verbindungslinie geschwenkt wird.

## Claims

1. Cytometer unit (1) with a receptacle (2) for an insertable, rotatable and preferably disk-shaped sample carrier (3), wherein a rotation unit (4) which can be coupled to an inserted sample carrier (3), and with which the sample carrier (3) inserted into the receptacle (2) is rotatable, is arranged in the receptacle (2), and wherein an optical path (11) for carrying out a cytometric measurement on a cytometer channel (12) of the inserted sample carrier (3) is formed in the receptacle (2), wherein a first fixing means (14) is formed with which the inserted sample carrier (3) can be contacted and a position of the cytometer channel (12) can thus be defined in a first adjustment direction (16) transversely with respect to the optical path (11), and wherein a second fixing means (19) is formed with which the inserted sample carrier (3) can be contacted and a position of the cytometer channel (12) can thus be defined in a second adjustment direction (18) along the optical path (11) in a position contacting the inserted sample carrier (3), **characterized in that** the first fixing means (14) and/or the second fixing means (19) are/is designed as in each case at least one ball pin (23, 24, 26) and **in that** the first fixing means (14) interacts with form-fit engagement with a counterpart fixing means (25) on the sample carrier (3).

2. Cytometer unit (1) according to Claim 1, **characterized in that** the first fixing means (14) and/or the second fixing means (19) contact(s) the sample carrier (3) on one side, preferably axially, in particular from a common side, in particular wherein a holding-down device (21) is designed to contact the inserted sample carrier (3) from a side facing away from the first fixing means (14) and/or the second fixing means (19).

3. Cytometer unit (1) according to one of Claims 1 to 2, **characterized in that** the optical path (11) is formed between at least one part of the first fixing means (14) and at least one part of the second fixing means (19).

4. Cytometer unit (1) according to one of Claims 1 to 3, **characterized in that** the first fixing means (14) and/or the second fixing means (19), for the definition of the position in the second adjustment direction (18), form(s) two bearing points for the insertable sample carrier (3), wherein the optical path (11) intersects a connection line between the two bearing points, and/or **in that** the first fixing means (14) is designed to yield elastically in a direction along the optical path (11).

5. Cytometer unit (1) according to one of Claims 1 to 4, **characterized in that** the first adjustment direction (16), in relation to a rotation axis (5) of the rotation unit (4), is oriented transversely with respect to a radial direction, in particular tangentially, and/or **in that** the second adjustment direction (18), in relation to the or a rotation axis (5) of the rotation unit (4), is oriented transversely with respect to the or a radial direction and a tangential direction, in particular axially.

6. Cytometry method in which, for a cytometric measurement, a cytometer channel (12) formed in a rotatable and preferably disk-shaped sample carrier (3) and containing a sample to be tested is brought into an optical path (11), wherein the sample carrier (3) is mounted rotatably about a rotation axis (5), wherein the sample carrier (3) is contacted by a first fixing means (14) for an orientation of the cytometer channel (12) on the optical path (11) at a distance from the rotation axis (5) in such a way, wherein a position of the cytometer channel (12) is defined in a first adjustment direction (16) transverse to the optical path (11), wherein the sample carrier (3) is contacted by a second fixing means (19) for an orientation of the cytometer channel (12) on the optical path (11) at a distance from the rotation axis (5) in such a way, and wherein a position of the cytometer channel (12) is defined in a second adjustment direction (18) along the optical path (11), **characterized in that** the first fixing means (14) and a counterpart fixing means (25) of the sample carrier (3) are brought into engagement with each other in order to fix the sample carrier (3) with a form fit for the definition of the position of the cytometer channel (12) in the first adjustment direction (16), wherein the first fixing means (14) is designed as a ball pin (23, 24, 26).

7. Cytometry method according to Claim 6, **characterized in that** the sample carrier (3) is/are contacted by the first fixing means (14) and/or the second fixing means (19) on one side, preferably axially, in particular from a common side, in particular wherein the first fixing means (14) yields during the definition of the position in the second adjustment direction (18).

8. Cytometry method according to one of Claims 6 and 7, **characterized in that** the sample carrier (3) is rotated about the rotation axis (5) for the definition of the position in the first adjustment direction (16), and/or **in that** the sample carrier (3) is displaced along the rotation axis (5) for the definition of the position in the second adjustment direction (18) and/or is pivoted about a connection line intersecting the optical path (11) and extending between two bearing points defined by the first fixing means (14) and/or the second fixing means (19).

## Revendications

1. Unité de cytomètre (1), avec un logement (2) pour un porte-échantillon (3) insérable, rotatif, de préférence en forme de disque, dans laquelle une unité de rotation (4) pouvant être couplée à un porte-échantillon inséré (3) est disposée dans le logement (2), avec laquelle le porte-échantillon (3) inséré dans le logement (2) peut être mis en rotation, et dans laquelle un chemin optique (11) est formé dans le logement (2) pour l'exécution d'une mesure cytométrique à un canal de cytomètre (12) du porte-échantillon inséré (3), dans laquelle il se trouve un premier moyen de fixation (14), avec lequel le porte-échantillon inséré (3) peut être mis en contact et une position du canal de cytomètre (12) peut ainsi être définie dans une première direction d'ajustage (16) transversalement au chemin optique (11), et dans laquelle il se trouve un deuxième moyen de fixation (19), avec lequel le porte-échantillon inséré (3) peut être mis en contact et une position du canal de cytomètre (12) peut ainsi être définie dans une deuxième direction d'ajustage (18) le long du chemin optique (11) dans une position contactant le porte-échantillon inséré (3), **caractérisée en ce que** le premier moyen de fixation (14) et/ou le deuxième moyen de fixation (19) est/sont réalisé(s) respectivement sous la forme d'au moins une tige à bille (23, 24, 26) et **en ce que** le premier moyen de fixation (14) coopère par emboîtement avec un moyen de fixation opposé (25) sur le porte-échantillon (3).

2. Unité de cytomètre (1) selon la revendication 1, **caractérisée en ce que** le premier moyen de fixation (14) et/ou le deuxième moyen de fixation (19) touche(nt) le porte-échantillon (3) sur un côté, de préférence axialement, en particulier sur un côté commun, en particulier dans lequel un élément de serrage (21) est conçu pour être mis en contact avec le porte-échantillon inséré (3) sur un côté opposé au premier moyen de fixation (14) et/ou au deuxième moyen de fixation (19).

3. Unité de cytomètre (1) selon une des revendications 1 à 2, **caractérisée en ce que** le chemin optique (11) est formé entre au moins une partie du premier moyen de fixation (14) et au moins une partie du deuxième moyen de fixation (19).

4. Unité de cytomètre (1) selon l'une quelconque des revendications 1 à 3, **caractérisée en ce que** le premier moyen de fixation (14) et/ou le deuxième moyen de fixation (19) forme(nt) pour la définition de la position dans la deuxième direction d'ajustage (18) deux points d'appui pour le porte-échantillon insérable (3), dans laquelle le chemin optique (11) coupe une ligne de liaison entre les deux points d'appui, et/ou **en ce que** le premier moyen de fixation (14) est réalisé de façon élastiquement escamotable dans une direction le long du chemin optique (11).

5. Unité de cytomètre (1) selon l'une quelconque des revendications 1 à 4, **caractérisée en ce que** la première direction d'ajustage (16) est orientée, par rapport à un axe de rotation (5) de l'unité de rotation (4), transversalement à une direction radiale, en particulier tangentiellement, et/ou **en ce que** la deuxième direction d'ajustage (18) est orientée, par rapport à un ou à l'axe de rotation (5) de l'unité de rotation (4), transversalement à la ou à une direction radiale et une direction tangentielle, en particulier axialement.

6. Procédé de cytométrie, dans lequel pour une mesure cytométrique, on amène un canal de cytomètre (12) formé dans un porte-échantillon rotatif (3), de préférence en forme de disque, et contenant un échantillon à analyser dans un chemin optique (11), dans lequel le porte-échantillon (3) est monté de façon rotative autour d'un axe de rotation (5), dans lequel on met le porte-échantillon (3) en contact avec un premier moyen de fixation (14) pour une orientation du canal de cytomètre (12) sur le chemin optique (11) à distance de l'axe de rotation (5), de telle manière qu'une position du canal de cytomètre (12) soit définie dans une première direction d'ajustage (16) transversalement au chemin optique (11), dans lequel on met le porte-échantillon (3) en contact avec un deuxième moyen de fixation (19) pour une orientation du canal de cytomètre (12) sur le chemin optique (11) à distance de l'axe de rotation (5), de telle manière qu'une position du canal de cytomètre (12) soit définie dans une deuxième direction d'ajustage (18) le long du chemin optique (11), **caractérisé en ce que** l'on met en engagement l'un avec l'autre le premier moyen de fixation (14) et un moyen de fixation opposé (25) du porte-échantillon (3), afin de fixer le porte-échantillon (3) par emboîtement pour la définition de la position du canal de cytomètre (12) dans la première direction d'ajustage (16), dans lequel le premier moyen de fixation (14) est réalisé sous la forme d'une tige à bille (23, 24, 26).

7. Procédé de cytométrie selon la revendication 6, **caractérisé en ce que** l'on met le porte-échantillon (3) en contact avec le premier moyen de fixation (14) et/ou le deuxième moyen de fixation (19) sur un côté, de préférence axialement, en particulier sur un côté commun, en particulier dans lequel le premier moyen de fixation (14) est escamoté pendant la définition de la position dans la deuxième direction d'ajustage (18).

8. Procédé de cytométrie selon une des revendications 6 ou 7, **caractérisé en ce que** l'on fait tourner le porte-échantillon (3) autour de l'axe de rotation (5) pour la définition de la position dans la première direction d'ajustage (16) et/ou **en ce que** l'on déplace le porte-échantillon (3) le long de l'axe de rotation (5) pour la définition de la position dans la deuxième direction d'ajustage (18) et/ou on le fait pivoter autour d'une ligne de liaison coupant le chemin optique (11) et s'étendant entre deux points d'appui définis par le premier moyen de fixation (14) et/ou le deuxième moyen de fixation (19).
